# EUROPEAN PATENT SPECIFICATION

(11) **EP 1 713 979 B1**
(45) Date of publication and mention of the grant of the patent: **17.11.2010**
(21) Application number: 05700234.7
(22) Date of filing: 28.01.2005
(51) Int. Cl.: E02B 9/08, F03B 13/12

(54) **WAVE ENERGY PLANT FOR ELECTRICITY GENERATION**
WELLENENERGIEANLAGE ZUR ELEKTRIZITÄTSERZEUGUNG
INSTALLATION UTILISANT L'ENERGIE DES VAGUES POUR LA PRODUCTION D'ELECTRICITE

(30) Priority: 30.01.2004 BR PI0402375
(43) Date of publication of application: 25.10.2006
(73) Proprietor: COPPE/UFRJ - COORDENACAO DOS PROGRAMAS DE POS GRADUACAO DE ENGENHARIA DA UNIVERSIDADE FEDERAL DO RIO DE JANEIRO, CEP-21945-970 Ilha do Fundao, RJ (BR)
(72) Inventor: ESTEFEN, Segen Farid, CEP-22261-001 Rio de Janeiro-RJ (BR); DA COSTA, Paulo Roberto, CEP-20771-070 Pilares-RJ (BR); PINHEIRO, Marcelo Martins, CEP-21941-984 Niteroi- RJ (BR)
(74) Representative: Andréasson, Ivar
(86) International application number: PCT/BR2005/000012
(87) International publication number: WO 2005/072044

(56) References cited:
- US-A- 3 970 415
- US-A- 4 076 464
- US-A- 4 931 662

## Description

### TECHNICAL FIELD

The concept of this invention deals with an ocean wave energy plant for electricity generation. It is composed by several components such as floaters, hydraulic pumps, turbine chambers, outflow regulating valve, hydraulic turbine and electric generator.

### BACKGROUND

In the year of 1799 in France, the wave energy was employed directly to drive pumps, mils and other heavy mechanisms. Since then, experiences with different concepts have been performed worldwide.

Following the oil crises of the 70's, the scientific research has had a significant increment in extracting increased amounts of electricity from wave energy, particularly in Europe.

Currently the electricity produced through the ocean wave energy is already treated commercially in a few cases. Some examples are: Netherlands with the project AWS (Achimeds Wave Swing) with 2MW of power, Portugal with the project OWC (Oscillating Water Column) with 400kW of power and the United Kingdom with the project LIMPET with 500kW of power. In Denmark it is in installation tests the project WAVE DRAGON, with power generation up to 4MW.

The United States, Canada, Australia, Ireland, Norway, New Zealand, Spain, Sweden, Greece, India, China, Korea and Japan are examples of countries that have been working in research and development on ocean wave energy.

From US 4,931,662 there is known a wave energy plant for electricity generation, comprising a floater attached to the end of a horizontal mechanical arm that is articulated at the other end point situated at a fixed structure, a hydraulic pump to pressurize fluid and a drive unit which in turn produces electrical energy by means of an electric generator. However, such an installation suffers from certain disadvantages, e.g. that its conceptual design requires a very large installation, which makes it expensive. Furthermore the conceptual design implies difficulties in achieving high efficiency.

### SUMMARY OF THE INVENTION

It is an object of the invention to provide an improved plant, which is achieved in accordance with what is defined in claim 1.

The concept of the proposed plant is distinguished by incorporating a hyperbaric chamber operating at high pressure, up to 2500 psi or 17Mpa (equivalent to 1750 meters of water column). Thus, the plant can operate under pressure up 17Mpa.

### BRIEF DESCRIPTION OF THE DRAWINGS

Figure 1 illustrates the equipments of a plant according to the invention, and
Figures 2 and 3 show the internal components of the outflow control valve.

### DETAILED DESCRIPTION OF THE INVENTION

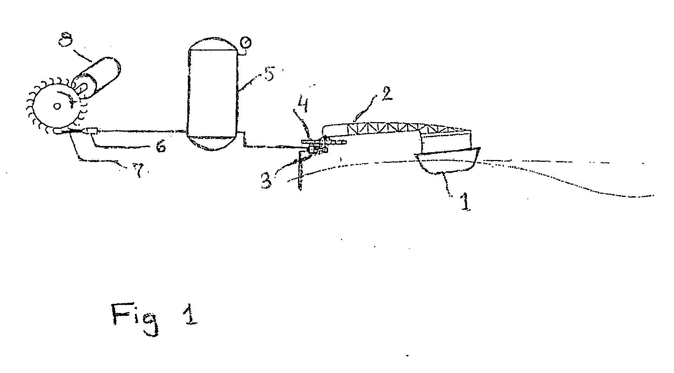

The present invention describes a wave energy plant as shown in fig. 1, where 1 represents a floater, 2 an articulated horizontal arm, 3 a hydraulic pump, 4 a platform for installation of the equipment, 5 a hyperbaric chamber, 6 an outflow control valve, 7 a hydraulic turbine and 8 an electric generator. The plant operates through the action of the sea waves on the floater 1, which can be of different size and shape, but preferably a rectangular floater. Each floater 1 is attached to a mechanical arm 2 articulated at its end point located at the main structure 4. The arm movements induced by the floater 1 work as an actuator on a horizontal piston pump 3, sending either pressurized ocean water, or fresh water, to a storage tank 5, a so called hyperbaric chamber. Inside the chamber 5 there is a certain amount of nitrogen gas so that the chamber works as a hydraulic accumulator, ejecting pressurized water to a hydraulic turbine when reaching the right operational level.

The amount of water fed into the hyperbaric chamber 5 is set freely by an outflow valve 6, controlling the movement of the turbine. This valve 6 operates with pressures up to 2600psi (17.5 Mpa) and it enables an outflow from 0,05 m³/s to 0,3 m³/s. The rotation of the shaft of the turbine 7 is transmitted to an electric generator 8 to convert mechanical energy into electricity. An electronic control system monitors both voltage and frequency of the produced electricity, in order to input electricity properly to the local grid.

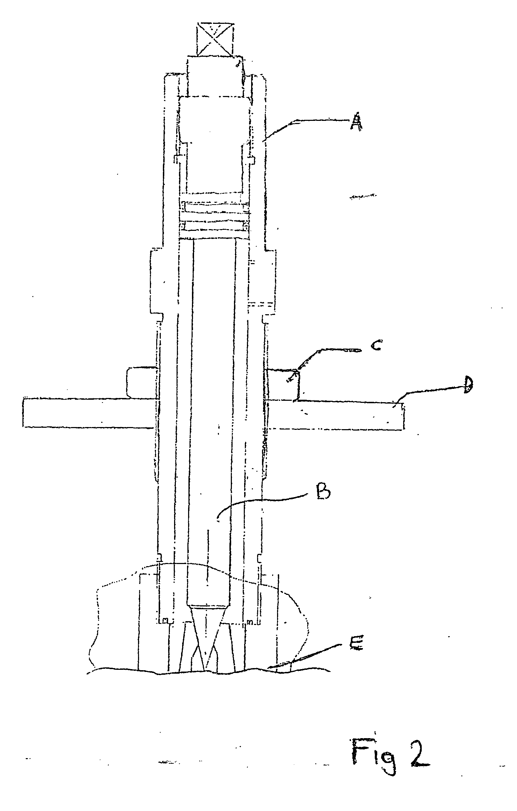

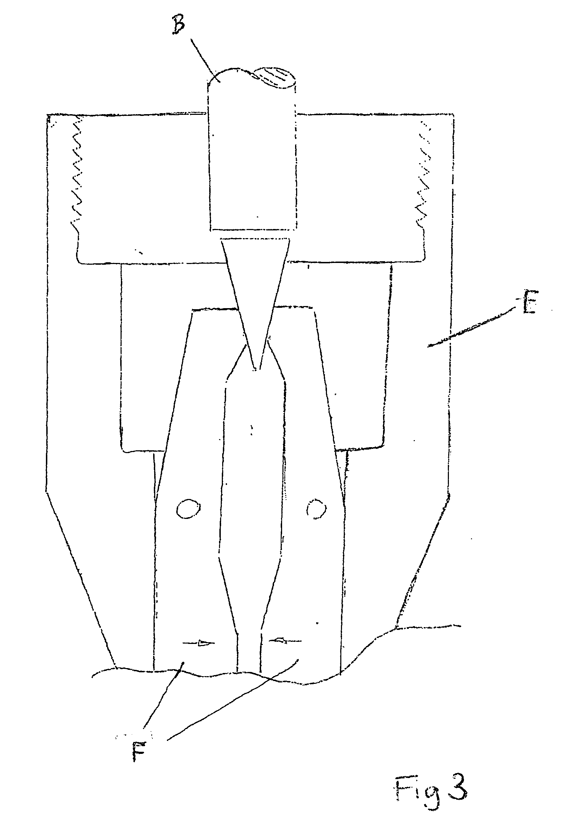

Figures 2 and 3 presents the outflow valve in more detail, wherein A refers to the valve's main body, B to the outflow adjustment needle, C to the valve adjustment ring, D to the main structure of the valve setting, and E the mechanical set for the outflow fine adjustment. Figure 3 shows the specific mechanical assembly of the outflow fine adjustment, where E represents the main body of the adjustment assembly, B the outflow adjustment needle and F mobile claws of the fine adjustment system.

The equipments of the plant can be mounted on a fixed platform 4 about five meters above the water sea level, next to the coast line (near shore system). For plants installed on the coast line or on existing piers, onshore system, it is recommended water depths greater than 10% of the wave length to avoid sea the bottom effects. The plant can also be installed floating in water depths greater than 35% meters (offshore system).

The plant power generation is given by the product of the outflow to move the turbine 7 and the pressure supplied by the hyperbaric chamber 5 during the operation. This pressure in a conventional hydroelectric plant is provided by the outflow from the waterfall height (potential energy). The operational pressure range of the plant is associated with the predominant sea conditions in the installation location, such as average frequency and the significative wave height, according to the table below.

**Table 1: Relationship between pressure and water column.**

| Pressure (Psi) | Pressure (MPa) | Water column (m) |
|---|---|---|
| 500 | 3.5 | 350 |
| 1000 | 7.0 | 700 |
| 1500 | 10.5 | 1050 |
| 2000 | 14.0 | 1400 |
| 2500 | 17.5 | 1750 |

The plant can use either the ocean as a water reservoir or be operated in closed circuit with stored fresh water; in this case the water is stored in a water tank. After pumped into the hyperbaric chamber 5 and stored under high pressure, the water jet is released to move the hydraulic turbine 7. The outflow of the water is controlled by a high pressure valve 6, especially designed for power control during the variation of the electricity demand, as well as to stop the plant for maintenance or in an emergency situation.

### ADVANTAGES OF THE INVENTION

- Production of clean and renewable energy.
- Contribution with additional electricity to the existing grid.
- Supply of electricity to islands or others distant places of the coast not reached by the electricity grid system.
- Modular and compact installations requiring low outflows and high pressures for operation, which means low expenditure costs.
- An increase of power can be obtained by adding modules (floater/ arms/ pump) to an existing plant.
- Clean energy, without environment impacts.

The equipments listed in the present invention do not have to be considered as definitive. Therefore, the number and sort of equipment can vary according to the site characteristics where the plant should be installed.

## Claims

1. Wave energy plant for electricity generation, consisting of a mechanical and hydraulic installation, comprising floaters (1) attached to the end of a horizontal mechanical arm (2) that are articulated at their other end point situated at a fixed structure (4), a hydraulic pump (3) to pressurize water, a turbine (7) and an electric generator (8), **characterized in that** said hydraulic pump (3) is arranged to pump water into a hyperbaric chamber (5) storing both gas and water and it that said two fluids at high pressure are arranged to drive the electric generating group, turbine (7) and generator (8) respectively, wherein said gas in said hyperbaric chamber (5) is nitrogen gas and/or air.

2. Plant, according to claim 1, **characterized by** the use of an outflow regulating high pressure valve (6) arranged to control the outflow of water from said hyperbaric chamber (5).

3. Plant according to claim 2, **characterized in that** said high pressure valve (6) consists of a main body (A), an outflow adjustment needle (B), a valve distance adjustment ring (C), a valve setting main structure (D) and a mechanical set (E) for outflow fine adjustment.

4. Plant according to claim 3, **characterized in that** mobile claws (F) are arranged to achieve said outflow fine adjustment.

5. A method for operating a wave energy plant according to claim 1, **characterized by** operating the plant using low outflow of water with high pressure.

## Patentansprüche

1. Wellenenergieanlage zur Erzeugung von Elektrizität, bestehend aus einer mechanischen und hydraulischen Einrichtung, umfassend Schwimmer (1), die an dem Ende eines horizontalen mechanischen Arms (2) angebracht sind, die an deren anderem Endpunkt gelenkig sind, der sich an einer festen Anordnung (4) befindet, eine hydraulische Pumpe (3), um Wasser unter Druck zu setzen, eine Turbine (7) und einen elektrischen Generator (8),
**dadurch gekennzeichnet, dass**
die hydraulische Pumpe (3) eingerichtet ist, Wasser in eine hyperbare Kammer (5) zu pumpen, die sowohl Gas als auch Wasser speichert; und
die zwei Fluide bei hohem Druck eingerichtet sind, die Elektrizitätserzeugungsgruppe, die Turbine (7) bzw. den Generator (8) anzutreiben, wobei das Gas in der hyperbaren Kammer (5) Stickstoffgas und/oder Luft ist.

2. Anlage nach Anspruch 1, **gekennzeichnet durch** die Verwendung eines den Abfluss regulierenden Hochdruckventils (6), das eingerichtet ist, den Abfluss von Wasser aus der hyperbaren Kammer (5) zu steuern.

3. Anlage nach Anspruch 2, **dadurch gekennzeichnet, dass** das Hochdruckventil (6) aus einem Hauptgehäuse (A), einer Abflussanpassnadel (B), einem Ventilabstand-Einstellring (C), einer Ventileinstell-Hauptanordnung (D) und einem mechanischem Satz (E) zur Feineinstellung des Abflusses besteht.

4. Anlage nach Anspruch 3, **dadurch gekennzeichnet, dass** mobile Klauen (F) eingerichtet sind, um die Feineinstellung des Abflusses zu erreichen.

5. Verfahren zum Betreiben einer Wellenenergieanlage gemäß Anspruch 1, **gekennzeichnet durch** Betreiben der Anlage unter Verwendung eines geringe Abflusses von Wasser mit hohem Druck.

## Revendications

1. Usine houlomotrice pour la génération d'électricité, constituée d'une installation mécanique et hydraulique, comprenant des flotteurs (1) fixés à l'extrémité d'un bras mécanique horizontal (2), qui sont articulés à leur autre extrémité situé sur une structure fixe (4), une pompe hydraulique (3) servant à pressuriser l'eau, une turbine (7) et un générateur électrique (8), **caractérisée en ce que** ladite pompe hydraulique (3) est aménagée pour pomper de l'eau dans une chambre hyperbare (5) stockant à la fois du gaz et de l'eau et **en ce que** lesdits deux fluides sous haute pression sont mis en oeuvre pour entraîner le groupe générateur électrique, la turbine (7) et le générateur (8) respectivement, dans laquelle ledit gaz se trouvant dans ladite chambre hyperbare (5) est de l'azote gazeux et/ou de l'air.

2. Usine selon la revendication 1, **caractérisée par** l'utilisation d'une vanne à haute pression (6) régulant le débit sortant aménagée pour commander le débit sortant d'eau provenant de ladite chambre hyperbare (5).

3. Usine selon la revendication 2, **caractérisée en ce que** ladite vanne (6) à haute pression est constituée d'un corps principal (A), d'un pointeau (B) d'ajustement du débit sortant, d'une bague (C) d'ajustement de distance de la vanne, d'une structure principale (D) de réglage de la vanne et d'un ensemble mécanique (E) pour un ajustement fin du débit sortant.

4. Usine selon la revendication 3, **caractérisée en ce que** des pinces mobiles (F) sont aménagées pour obtenir ledit ajustement fin du débit sortant.

5. Procédé d'exploitation d'une usine houlomotrice pour actionner l'usine selon la revendication 1, **caractérisé par** l'exploitation de l'usine en utilisant un faible débit sortant sous pression élevée.
